# EUROPEAN PATENT SPECIFICATION

(11) **EP 3 225 609 B1**
(45) Date of publication and mention of the grant of the patent: **23.09.2020**
(21) Application number: 16196739.3
(22) Date of filing: 01.11.2016
(51) Int. Cl.: C09C 3/04, C09C 3/08, C09C 1/02

(54) **FOOD-GRADE, VOC-FREE, ANTI-HUMECTANT LIMESTONE GRINDING**
SCHLEIFEN VON VOC-FREIEM, ANTIFEUCHTHALTEMITTELKALKSTEIN IN NAHRUNGSMITTELQUALITÄT
MEULAGE DE CALCAIRE DE QUALITÉ ALIMENTAIRE, SANS COV ANTI-HUMECTANT

(30) Priority: 30.03.2016 US 201662315213 P
(43) Date of publication of application: 04.10.2017
(73) Proprietor: GCP Applied Technologies Inc., Cambridge, MA 02140-1692 (US)
(72) Inventor: Gibson, Larry, Arlington, MA 02476 (US); Chun, Byong-Wa, Waban, MA 02468 (US); Cheung, Josephine H., Lexington, MA 02421 (US); Buzzell, Leslie A. J., Burlington, MA 01803 (US)
(74) Representative: J A Kemp LLP

(56) References cited:
- EP-A1- 2 692 241
- EP-A2- 1 728 771
- WO-A1-2014/043599
- JP-A- H1 192 141

## Description

### Field of the Invention

This invention relates to additives for refinement of minerals, and more specifically to the use of an aliphatic fatty acid compound for grinding carbonate material into finer particle size using a VOC-free and food-grade grinding process which minimizes water-uptake by the ground particles.

### Background of the Invention

As calcium carbonate, alternatively referred to herein as limestone (CaCO₃), is useful as a filler in food, pharmaceutical, and heath care products (e.g., toothpaste), it is known to employ various grinding additives for enhancing the efficiency of the grinding process through which the carbonate material is ground into smaller particle sizes. Such efficiency enhancement is understood to occur when the energy required for grinding the material to a certain particle size is reduced.

It is known to grind inorganic solids such as cement and limestone using glycerol compounds. For example, US Patent 3,615,785 of Moorer et al. disclosed the use of polyglycerols as additives for the manufacture of hydraulic cement.

As another example, US patents 7,922,811 and 8,979,998 of Jardine et al. (owned by the common assignee hereof) disclosed the use of crude glycerin (an alternative name for glycerol), as obtained from biomass sources (such as biodiesel fuel production) in combination with conventional cement additives for grinding cement clinker and/or limestone particles.

WO 2014/019827 of Lopez-Gonzalez et al. (SIKA AG) disclosed the use of food-grade grinding aids for improved grinding of calcium carbonate and hydrated lime. The grinding aid composition taught by Lopez-Gonzalez comprised one or more polyhydric alcohols used in the grinding aid composition in an amount of from about 10%-95% by weight (and most preferably 20%-40% by weight), one or more carboxylic acids in the amount of from about 0.1%-10% by weight (and most preferably 1%-2% by weight), or a mixture of the polyhydric alcohol and carboxylic acid.

EP 2 692 241 A1 describes a food grade grinding composition.

However, the present inventors believe that a novel method and grinding composition is required for food-grade, VOC-free (e.g., free of volatile organic compounds) grinding of carbonate (limestone) and lime. As set forth in European Union regulations, to be considered VOC-free, a composition must be devoid of organic matter having a boiling point that is less than or equal to 250 degrees Celsius at standard atmospheric pressure (101.325 kPa). (*See e.g.,* EU "Paint Directive" 2004/42/EC; *See also* European Eco-Labelling Scheme 2002/739/EC, amending 1999/10/EC). Under this criteria, it would not appear to the present inventors that the use of carboxylic acids (e.g., acetic acid) which have boiling points lower than 250 degrees Celsius would comport with VOC-free regulations.

Moreover, the prior art approaches which involve large amounts of glycerol or other polyols could detrimentally affect the resultant finely ground material by introducing moisture-absorbing behavior. This humectant property could decrease bulk material flow/transport characteristics and reduce the efficiency of the grinding process.

Hence, a novel method and grinding aid composition for comminuting limestone and lime is sorely needed.

### Summary of the Invention

In surmounting the prior art disadvantages, the present invention provides an effective method which is VOC-free, is food-grade approved or otherwise approved for contact with food, and is resistant to the inherent moisture-absorbing ability of ground carbonate or lime (including hydrated lime) which could otherwise diminish efficiency of the grinding operation.

It is believed that use of the liquid grinding additive compositions can increase grinding efficiency in ball mills (which use spheres within a rotating cylinder) as well as in roller mills (which employ rollers on a horizontal table or in opposed nipped configuration) which grind carbonate materials, and can be used where the carbonate materials are ground along with mineral particles including lime, dolomite, talc, titanium dioxide, alumina, kaolin, ceramics, cement clinker, or mixture of these.

Exemplary methods of the invention and compositions useful in the methods of the present invention thus involve the use of a liquid-additive grinding aid composition that incorporates at least 10%, more preferably at least 15%, and most preferably at least 20% or 30% by total weight of a short-chain aliphatic fatty acid (e.g., potassium sorbate), and optionally a simple polyol (glycerol), to enhance grinding of minerals using food-grade materials which are VOC-free and which resists moisture absorption by the resultant ground particles in a manner that might be fairly described as "anti-humectant."

The present inventors observe here that WO 2014/019827 of Lopez-Gonzalez et al., mentioned in the background section, had previously taught the use of potassium sorbate as an antimicrobial agent in a grinding additive composition for dry grinding of carbonate particles. However, Lopez-Gonzalez et al. only taught that antimicrobial (or antifungal, antibacterial) agents could be used, at most, in amounts up to 5% by weight, preferably in an amount from 0.1% to 3% by weight, and most preferably in an amount of 0.5% to 2 % by weight. The present inventors discovered that potassium sorbate at higher amounts (e.g., 10%, 20%, etc.) enhanced grinding to a surprisingly appreciable extent (and this is demonstrated in the comparative data set forth by the present inventors in the detailed description of exemplary embodiments which follows).

Thus, the present invention provides a method for comminuting inorganic material to a finer particle size, comprising: grinding a carbonate material into powder particles, in a ball or roller mill, into which is introduced a liquid-additive composition comprising (a) a fatty acid compound in the amount of 10%-60% by weight, the fatty acid compound being represented by the structural formula CH₃-(CH)ₙ-COO⁻M⁺ wherein M represents potassium, and n represents an integer of 3 to 10; and (b) water in the amount of 5%-90%, all percentages being based on total weight of the liquid-additive composition introduced to the carbonate powder particles being ground, and wherein the liquid-additive composition is used at a dosage of at least 100ppm based upon dry material being ground.

Also described herein is a liquid additive composition comprising a combination of the above-described fatty acid compound in combination with water in the above-described percentage ranges (by total weight based on the liquid additive composition).

An exemplary liquid grinding additive composition for use in the methods of the present invention for enhancing efficiency of grinding carbonate particles to smaller size, comprises: (a) fatty acid compound in the amount of 10%-60% by weight, the fatty acid compound being represented by the structural formula CH₃-(CH)ₙ-COO⁻M⁺ wherein M represents potassium, and n represents an integer of 3 to 10; and (b) water in the amount of 5%-90%, all percentages being based on total weight of the liquid-additive composition introduced to the carbonate powder particles being ground.

The present inventors believe that the use of a large amount of the above-described low molecular weight fatty acid compound (at least 10% or more by weight) enables the preferred inclusion of glycerin and is believed to avoid or minimize the detrimental inherent ability of the glycerin to absorb moisture from the environment which might otherwise work to decrease energy efficiency of a ball mill or roller mill grinding process used for comminuting the carbonate material into smaller particle size.

Further features of the invention will be described in further detail hereinafter.

### Detailed Description of Exemplary Embodiments

The term "calcium carbonate" is alternatively known as "limestone" which is composed mainly of calcium carbonate or dolomite, used as a filler and also as a building material and in the making of cement. Methods and additive compositions are intended to be used for dry (powder) grinding of carbonate into finer particulate sizes, and the carbonate material can also be ground with one or more other inorganic materials, such as lime, dolomites, talc, titanium dioxide, alumina, and kaolin, ceramics, and cement clinker.

Methods of the present invention and compositons used in said methods employ the use of a liquid-additive composition which comprises a fatty acid compound which has 3-10 carbons, more preferably 5-8 carbons, and most preferably 6 carbons. A preferred fatty acid compound is a metal sorbate, preferably potassium sorbate.

Exemplary "liquid-additive compositions" useful in the methods of the present invention are described as a "liquid" form in that they can be sprayed onto the carbonate material to be ground using pressured nozzles and/or pumps. Water is preferably used to liquefy the low molecular weight fatty acid (e.g., potassium sorbate) and render it sprayable or injectable in liquid form into the material to be ground.

Glycerin (e.g., glycerol) may be employed in exemplary embodiments to enhance the ability of the liquid-applied grinding additive composition to coat the carbonate particles during grinding. Glycerin refers to 1,2,3-propane triol. In exemplary embodiments of the invention, the glycerin may be a crude glycerin derived from biomass sources, such as a byproduct of biodiesel production, as taught in US patents 7,922,811 and 8,979,998 of Jardine et al., mentioned in the background section above.

The present inventors believe that the use of low molecular weight (i.e., short chain) fatty acid compounds, such as potassium sorbate, in amounts of at least 10%, more preferably at least 20%, and most preferably at least 30% based on total weight of the liquid-additive cement grinding composition helps to minimize or delimit the inherent moisture-absorbent (or humectant) properties of the resultant ground carbonate particles, thereby helping to enhance the efficiency of the grinding operation.

The grinding aid compositions used in the method of the invention can provide a ground material, wherein the amount of moisture absorbed by the ground material is reduced, compared the ground materials prepared using conventional grinding aids. Typically the ground inorganic material that results from the method of the invention absorbs less than 1.6mg/g (mg of water absorbed per g of ground inorganic material), more preferably less than 1.4mg/g. Typically the ground inorganic material that results from the method of the invention absorbs about the same amount of water as ground inorganic material that has been produced in a method wherein no grinding aid composition is used or absorbs less water, e.g. not greater than 150wt% of the amount of water absorbed by ground inorganic material produced without a grinding aid, preferably not greater than 105wt% and most preferably around 100wt% or less.

The term "fatty acid" will also be understood by those versed in the chemical arts to refer also to the salt form; and, conversely, the terms potassium sorbate, calcium sorbate, and sodium sorbate will be understood to refer to sorbic acid within the aqueous environment of the liquid-additive composition of the present invention. To this point, such acid/salt materials have been used as antimicrobial agents, most often as food preservatives, but not as grinding-additives.

As summarized above, an exemplary method of the present invention for comminuting inorganic material to a finer particle size, comprises: grinding a carbonate material into powder particles, in a ball or roller mill, into which is introduced a liquid-additive composition comprising (a) a fatty acid compound in the amount of 10%-60% (more preferably 20%-60%, and most preferably 30%-55%) by weight, the fatty acid compound being represented by the structural formula CH₃-(CH)ₙ-COO⁻M⁺ wherein M represents potassium, and n represents an integer of 3 to 10 (more preferably n is 4-8, and most preferably n is 4); and (b) water in the amount of 5%-90%, all percentages being based on total weight of the liquid-additive composition introduced to the carbonate powder particles being ground.

In further exemplary methods of the invention and compositions useful in such methods, glycerin is present within the liquid additive in the amount of 0%-90%, preferably at least 5%, more preferably 20%, and most preferably 30%, based on total weight of the liquid-additive composition introduced to the carbonate particles being ground.

In still other preferred embodiments, the liquid additive composition used in the methods of the invention is a clear liquid. For example, when potassium sorbate is employed as the fatty acid component, the liquid additive composition has a visually transparent orange color. The present inventors believe that clarity of the solution corresponds with an excellent ability of the liquid-additive composition to coat the carbonate particles quickly, thereby decreasing frictional coefficients of the particle surfaces and thus increasing efficiency of the particle grinding operation, as the coated surfaces more readily resist pack setting. In other words, the invention helps to reduce the energy that might be necessary to initiate flow of the powder in a given direction, which is important when unloading the particles from storage bins and moving the power during shipping or manufacturing operations.

In still further exemplary embodiments, the liquid additive composition used in the methods of the invention comprises glycerin derived as a byproduct of biodiesel fuel production. In this regard, teachings of the use of crude glycerin obtained from biomass sources, as provided in US patents 7,922,811 and 8,979,998 of Jardine et al., provide helpful instruction. Jardine et al. disclosed that crude glycerin obtained as byproduct from biodiesel production can lower the risk of sludging during cement grinding (using conventional cement grinding additive such as alkanolamines) when compared to glycerins obtained from fossil fuel sources. Jardine et al. employed smaller average weight molecules, compared to the larger polyglycerols (e.g., series of glycerol molecules) taught in US Patent 3,615,785 of Moorer et al.

In further preferred methods of the present invention and compositions used in said methods, the liquid additive composition comprises water in the amount of 5%-90% and more preferably 20%-60% based on total weight of the additive composition. The prevent inventors believe that a relatively large weight proportion of water can be used, for improved particle surface coating, without danger of overly moistening the resultant ground particles, due to the presence of the small chain fatty acids within the liquid additive composition.

In preferred methods of the invention and compositions useful in said methods, the mass ratio of polyhydric alcohols (such as glycerin) to carboxylic acid compounds (including short chain fatty acid compounds such as potassium sorbate) in the liquid additive composition should not exceed 1.5. Otherwise, formulations may create a water-absorbing property in the resultant ground carbonate particles.

The liquid additive grinding aid composition may preferably also comprise tripropylene glycol and/or polypropylene glycol. The polypropylene glycol preferably has a molecular weight in the range of from 300 to 3000g/mole, and more preferably from 1200-3000g/mole. These compounds also act as grinding aids, meet the "food grade", or "food contact" requirements and are not classified as VOCs (the boiling point of tripropylene glycol is 265.1°C and the boiling point of polypropylene glycol with a molecular weight of 425g/mole is 287.6°C). By contrast, monopropylene glycol, which is commonly used as a grinding aid, has a boiling point of 187°C, so is not considered VOC free. The amount of tripropylene glycol and/or polypropylene glycol is suitably from 0.1 to 88 wt%, more preferably from 5 to 75 wt% and most preferably from 10 to 60 wt%, based upon the weight of the grinding aid composition.

The liquid additive grinding aid composition may preferably also comprise an alkanolamine; more preferably triethanolamine and/or triisopropanolamine. These compounds also act as grinding aids, meet the "food grade", or "food contact" requirements and are not classified as VOCs (the boiling point of triethanolamine is 335°C and the boiling point of triisopropanolamine is 306°C) . The amount of triethanolamine and/or triisopropanolamine is suitably from 0.1 to 70 wt%, more preferably from 5 to 60 wt% and most preferably from 10 to 50 wt%, based upon the weight of the grinding aid composition. For certain applications it may be desirable that the ground inorganic material does not comprise any amine, so in one embodiment of the invention, the grinding aid composition does not comprise an alkanolamine.

The liquid additive grinding aid composition may preferably also comprise an amino acid or a salt of an amino acid, wherein the amino acid is preferably chosen from phenylalanine, isoleucine, tryptophan, leucine, valine, methionine, tyrosine, cysteine, alanine, threonine, histidine and glycine. These compounds also act as grinding aids, meet the "food grade" requirements and are not classified as VOCs. The amount of the amino acid or the salt of an amino acid is suitably from 0.1 to 10 wt%, more preferably from 1 to 5 wt% and most preferably from 3-4 wt%, based upon the weight of the grinding aid composition.

The liquid additive grinding aid composition may preferably also comprise ascorbic acid or a salt of ascorbic acid. Suitable salts of ascorbic acid include salts of alkali metals and alkaline earth metals, e.g. monosodium ascorbate and calcium diascorbate. The terms "ascorbic acid" and "ascorbate" are used to cover all stereoisomers of ascorbic acid and ascorbate, i.e it encompasses L-ascorbic acid, D-ascorbic acid, D-isoascorbic acid (also known as erythorbic acid) and L-isoascorbic acid, and the corresponding ascorbates. These compounds also act as grinding aids, meet the "food grade" requirements and are not classified as VOCs. The amount of the ascorbic acid or the salt of ascorbic acid is suitably from 0.1 to 24 wt%, more preferably from 2 to 15 wt% and most preferably from 5 to 10 wt%, based upon the weight of the grinding aid composition.

The liquid additive grinding aid composition may preferably also comprise benzoic acid or a salt of benzoic acid. These compounds also act as grinding aids, meet the "food grade" requirements and are not classified as VOCs. The amount of benzoic acid or the salt of benzoic acid is suitably from 0.1 to 36wt% of benzoic acid or a salt of benzoic acid, more preferably from 2 to 30wt%, and even more preferably from 6 to 20wt%.

The liquid additive grinding aid composition may preferably also comprise a sugar alcohol, more preferably ribose. Ribose also acts as a grinding aid, meets the "food grade" requirements and is not classified as VOCs.

The carbonate material which is ground into finer particle size may comprise carbonate which is calcined, non-calcined, or a mixture of these. Optionally, the carbonate material may also be ground with one or more additional organic materials, such as lime, dolomite, talc, titanium dioxide, alumina, kaolin, ceramics, and cement clinker. For example, calcium carbonate in the form of limestone particles may be ground along with lime (including hydrated lime).

With respect to VOC-free and food-grade requirements, the present invention provides flexibility and can achieve results not provided by existing dry grinding processes and additives. For example, while US patent 8979998 B2 describes an additive composition useful for dry-grinding of calcium carbonate that is comprised of glycerin, sodium acetate and water, this effective formulation may not be optimal for calcium carbonate that is intended to be applied in paints and plastics. In contrast, the liquid additives of the present invention, by employing glycerol in combination with small chain fatty acid (e.g., potassium sorbate) and water can be employed for these purposes.

Potassium sorbate is a short-chained unsaturated aliphatic compound having alkyl chain length of six carbons. The present inventors believe that this compound has numerous favorable properties enabling the formulation of liquid grinding composition to meet customer needs, including high solubility in water (55.8 g/mL at 100 deg. C) which facilitates a high solids content in the product formulation, and also including a relatively high boiling point (e.g., greater than 270 degrees Celsius) which is advantageous for meeting VOC-free requirements.

The present inventors believe that the liquid-additive compositions used in the methods of the present invention improve the overall throughput of calcium carbonate mill grinding at a minimum dosage of 0.01 % (100 ppm) based on dry material being ground, and that minimum dosage requirement for potassium sorbate as low as 0.001% may be potentially achieved. These throughput rates and dosage features are further discussed in the following examples involving dry-grinding of calcium carbonate.

While the invention is described herein using a limited number of embodiments, these specific embodiments are not intended to limit the scope of the invention as otherwise described and claimed herein. Modification and variations from the described embodiments exist. More specifically, the following examples are given as a specific illustration of embodiments of the claimed invention and comparative examples wherein the embodiments of the claimed invention are shown to obtain performance objectives not disclosed or suggested in the prior art. It should be understood, moreover, that the invention is not limited to the specific details set forth in the examples.

### Example 1

An exemplary liquid-additive grinding additive composition can be formulated by mixing together the following components: potassium sorbate at 10%-60%, glycerin at 0-90%, and water at 5%-90% (all percentages based on total weight of liquid additive composition) using an overhead mixer (Model RZR50, Caframo of Georgian Bluffs, Ontario, Canada) at speeds of at least 100 rpm and greater.

These components are readily mixed into stable solutions after approximately 10 minutes of mixing. The order of addition which is apparently most effective is as follows: first, into water is added the glycerin (e.g., GCP Raw Material - GLYB), and then potassium sorbate (Pfaltz & Bauer Inc., Waterbury, CT). The potassium sorbate, which is very soluble in water and soluble in glycerin, is slowly and gradually added to the mixture over a period of 1 minute.

### Example 2

Another exemplary liquid grinding additive composition can be achieved in less than 10 minutes when mixing the following components at approximately 1500 rpm: potassium sorbate at 30%, glycerin at 30%, and water at 40% (all percentages based on total weight of liquid additive composition).

This mixture can also be prepared under slow mixing conditions (e.g., less than 100 rpm after 30 minutes).

### Example 3

### (Preparation of Calcium Carbonate for Grinding)

Approximately 6 kg of coarse calcium carbonate rocks up to 50 mm diameter are first preheated for a minimum of 12 hours at 130 degrees Celsius and then crushed using a jaw crusher (Model 2x6 from Sturtevant Inc., Hanover, MA) followed by a roll crusher (model 8x5, Sturtevant Inc., Hanover, MA) which reduces the particle size to an average maximum diameter of less than 2 mm. The mineral is then sieved into size fractions with the following average diameters: 0.841 mm, 0.595 mm, 0.250 mm, 0.149 mm, 0.074 mm, 0.044 mm and all particles having a diameter less than 0.044mm. These fractions are further heated for a minimum of one hour at 130 degrees Celsius to drive off excess moisture. The now preheated calcium carbonate fractions are recombined make up 100 g of starting material with the original size distribution produced from pre-crushing. Each 100 g sample is mixed using an overhead mixer (Model RZR50, CAFRAMO, Georgian Bluffs, Ontario, Canada) at 300 rpm for 2 minutes.

The calcium carbonate is then dosed with a grinding aid composition made according to Example 4 at a dosage of 100 to 5000 ppm based on weight of calcium carbonate particles, using a micropipette. The content is then mixed further for an additional 3 minutes following administration of the grinding aid. The entire 100 g sample is used for each single batch grind described in the milling procedure.

### Milling of Calcium Carbonate

The calcium carbonate particles are milled using a planetary ball mill system (Model: Pulverisette 5/4, Fritsch, Idar-Oberstein, Germany). 100 g of pretreated calcium carbonate is poured into a grinding bowl that is pre-loaded with 20 stainless steel balls (1/2" diameter), which is then clamped into the mill equipment. The planetary ball mill machine is then turned on for 10 to 90 minutes at 100 - 300 rpm. (It is believed that dry-milling of calcium carbonate particles is not limited to planetary ball mill systems, as the overall method is quite applicable to full-scale ball mills and roller mills including open and closed circuit design systems).

### Characterization of Milled Calcium Carbonate

The contents of the grinding bowl is sieved using a relatively large mesh (> 1 mm) to separate the grinding media from the finished particles. The finished product is then mixed using an overhead mixer for 2 minutes, and evaluated based on the following factors: (A) surface area testing using Blaine air permeability apparatus in accordance with ASTM C204 (1999); (B) size distribution testing in terms of percentage of residual particles remaining on the 45 um sieve using Model Air Jet Sieve, from Hosokawa ALPINE, Augsburg, Germany; and (C) flowability testing in terms of modified pack set testing in accordance with ASTM C1565 (2011). (It is noted that ASTM C1565 calls for a particular apparatus to be used in the testing procedure wherein 50 g of powder is vibrated at a setting of 60 V for 3 minutes; the 250 mL Erlenmeyer flask is then left at rest for 1 minute and then placed on a Roto-Tester to determine the pack set according to ASTM procedure).

### Grinding Aid Performance Assessment

Sample A and Sample B are compared with: water (Sample Water), monopropylene glycol (Sample MPG) used as an example of a well-known grinding additive used in the manufacturing industry, and prior art (Sample "PA"). MPG does not meet the previously defined VOC-free requirement, and Sample PA (contains sodium acetate and 50% by weight of a glycerol) may encourage humectant behavior. The speed of the grinding ball mill was set at 150 rpm, and grinding took place for 30 minutes.

**Table 3**

| **Component (ppm)** | **Sample Water** | **Sample MPG** | **Sample PA** | **Sample A** | **Sample B** |
|---|---|---|---|---|---|
| Water | 520 | 520 | 497 | 520 | 520 |
| Glycerol | - | - | 624 | 390 | - |
| Monopropylene Glycol | - | 780 | - | - | - |
| Sodium Acetate | - | - | 179 | - | - |
| Potassium Sorbate | - | - | - | 390 | 390 |

### Example 4

The ability of grinding additive compositions containing potassium sorbate to produce finely ground limestone particles with improved surface area, size distribution, and bulk flow were compared against a blank condition (Sample Water), monopropylene glycol (Sample MPG), the industry standard, and prior art (Sample PA), as shown in Table 4 below. It should be noted that the measurement errors listed were based on the standard deviation on measurements reported from two separate grinds per experimental condition.

**Table 4**

| **Formulation** | **Surface Area (m²/kg)** |
|---|---|
| Sample Water | 357 +/- 0 |
| Sample MPG | 411 +/- 0 |
| Sample PA | 434 +/- 1 |
| Sample A | 436 +/- 1 |
| Sample B | 407 +/- 1 |

As shown in Table 4, both Sample A and Sample B liquid grinding additive formulations achieved respectable performance that was either similar or outperformed MPG in grinding carbonate into finer particle sizes under the conditions outlined above. Sample A produced calcium carbonate particle surface areas that are comparable to Sample PA which employed sodium acetate (prior art) grinding additive. Sample B provided higher particle surface area, compared to water, demonstrating that potassium sorbate is highly effective as a grinding aid when used in dosages of at least 10% by wt. or more.

The particle sizes obtained from use of the respective grinding additive samples are also examined with respect to residual particles left on a 45-micron screen, and the results are shown in Table 5 below:

**Table 5**

| **Formulation** | **45 Micron Residue (%)** |
|---|---|
| Sample Water | 25.7 +/- 0.3 |
| Sample MPG | 5.7 +/- 0.6 |
| Sample PA | 8.2 +/- 0.3 |
| Sample A | 6.9 +/- 0.2 |
| Sample B | 10.4 +/- 0.1 |

As seen in Table 5, both Sample A and Sample B formulations serve as grinding aids under the conditions outlined. The residue produced from grinding carbonate using Sample A is comparable to Sample MPG, the industry standard, and similarly Sample B delivered considerably lower particle residue compared to the particles ground using Sample Water, demonstrating again that a potassium sorbate solution is an effective standalone grinding aid.

Next, the anti-humectant behavior of the sample liquid grinding additives are tested with respect to their ability to resist pack-setting of the powder composition after grinding. The results are summarized in Table 6 below.

**Table 6**

| **Formulation** | **Packset Index** |
|---|---|
| Sample Water | 9.8 +/- 0 |
| Sample MPG | 9.1 +/- 0.1 |
| Sample PA | 18.4 +/- 0.3 |
| Sample A | 11.9 +/- 0.4 |
| Sample B | 9.3 +/- 0.1 |

Table 6 provides insight into the humectant behavior exhibited by Sample PA. The pack set test, used for demonstrating flowability of calcium carbonate particles after grinding, is dependent on the physical conditions (temperature, humidity, extent of vibration) and surface area of the powder material. In this case, Sample PA appears to encourage a higher level of moisture absorption than the candidate formulations, and thus the high pack set index numbers suggest poor flowability of the powder.

Fortunately, Sample A does not appear to produce the same potentially detrimental results to the calcium carbonate, and is more comparable to the industry standard Sample MPG.

### Example 5

This example distinguishes the function of potassium sorbate. More specifically, it illustrates the differences in surface area and size distribution of ground limestone particles when the compound is incorporated in compositions at levels adequate for food preservation, as opposed to the minimum amounts taught by the present inventors for production of finely ground calcium carbonate particles.

Here the present inventors surprisingly discovered that using potassium sorbate in liquid grinding additive compositions in even amounts up to 5% by total weight (which is well beyond the percentage amount previously taught as suitable for antimicrobial and food preservative applications) did not achieve significant enhancement of dry particle grinding efficiency.

The results showing 1% and 5% addition of potassium sorbate compared to the surprising results obtained at the higher percentage rates taught by the present inventors are summarized below in Table 7 and Table 8.

**Table 7**

| **Formulation** | **Surface Area (m²/kg)** | **% Change in Surface Area** / **% Increase in Dosage** |
|---|---|---|
| 1000 ppm Water | 364 +/- 0 | |
| 1010 ppm 1 wt-% Potassium Sorbate | 375 +/- 1 | N/A |
| 1053 ppm 5 wt-% Potassium Sorbate | 388 +/- 1 | 0.01 |
| 1111 ppm 10 wt-% Potassium Sorbate | 413 +/- 0 | 0.06 |
| 1250 ppm 20 wt-% Potassium Sorbate | 413 +/- 0 | 0 |
| 1333 ppm 25 wt-% Potassium Sorbate | 415 +/- 0 | 0.01 |
| 1429 ppm 30 wt-% Potassium Sorbate | 415 +/- 0 | 0 |

**Table 8**

| **Formulation** | **45 Micron Residue (%)** | **% Change in Residue / % Increase in Dosage** |
|---|---|---|
| 1000 ppm Water | 23.7 +/- 0 | |
| 1010 ppm 1 wt-% Potassium Sorbate | 22.7 +/- 0 | N/A |
| 1053 ppm 5 wt-% Potassium Sorbate | 17.9 +/- 0 | 0.05 |
| 1111 ppm 10 wt-% Potassium Sorbate | 15.5 +/- 0 | 0.12 |
| 1250 ppm 20 wt-% Potassium Sorbate | 12.2 +/- 0 | 0.17 |
| 1333 ppm 25 wt-% Potassium Sorbate | 11.9 +/- 0 | 0.07 |
| 1429 ppm 30 wt-% Potassium Sorbate | 8.9 +/- 0 | 0.87 |

Table 7 and Table 8 demonstrate that at concentrations within the conventional percentages corresponding to antimicrobial applications (1%) and even in excess of this conventional dosage amount (5%), the particle residue produced from grinding calcium carbonate does not really differ from that of water. In both cases, the increase in dosage from 5 wt-% to 10 wt-% results in a surprising increase in the grinding efficiency of the process. Moreover, at elevated levels of potassium sorbate, such as at the preferred 30% amount (by weight based no liquid additive composition), the potassium sorbate performs comparably to the conventional grinding aids as summarized above in Table 5.

### Further Grinding Aid Performance Assessment

The calcium carbonate was prepared as described above and was then pre-ground in the ball mill system for 30 minutes. Then the grinding aid composition was added and further milling in a planetary ball mill took place for 10 minutes. Characterisation was carried out as before.

Ten different grinding aids, as described in Table 9, were tested and one test was carried out with no grinding aid:

**Table 9**

| | Grinding Aid | Dosage (ppm of dry grinding aid, based upon mass of calcium carbonate) |
|---|---|---|
| Example 6 | 75wt% TPG/Potassium Sorbate/TIPA (5.6:1:1) in water | 1500ppm |
| Example 7 | 62wt% TPG/potassium sorbate (2.7:1) in water | 1500ppm |
| Example 8 | 75wt% PPG/Potassium Sorbate/TIPA (5.6:1:1) in water | 1500ppm |
| Example 9 | 62wt% PPG/potassium sorbate (2.7:1) in water | 1500ppm |
| Example 10 | 30wt% potassium sorbate in water | 1500ppm |
| Example 11 | 60% glycerol/potassium sorbate 1:1 | 1500ppm |
| Comparative Example 1 | 60wt% TPG in water | 1500ppm |
| Comparative Example 2 | 60wt%PPG in water | 1500ppm |
| Comparative Example 3 | 60wt% Glycerol/ sodium acetate (3.4:1 ratio) in water | 1500ppm |
| Comparative Example 4 | 60wt% Glycerol/ TIPA (51:9) in water | 1500ppm |
| Comparative Example 5 | None | 0 |

TPG is tripropylene glycol, PPG is polypropylene glycol, and TIPA is triisopropanolamine.

Table 4 shows the results of the characterization tests:

**Table 4**

| | Surface area (cm²/g) | Size distribution (% retained on 45µm sieve) | Water absorption (mg/g) |
|---|---|---|---|
| Example 6 | 611 | 4 | 1.33 |
| Example 7 | 609 | 4 | 1.29 |
| Example 8 | 607 | 4.4 | 1.20 |
| Example 9 | 614 | 5.1 | 1.04 |
| Example 10 | 596 | 5.2 | 1.11 |
| Example 11 | 628 | 3.2 | 1.64 |
| Comparative Example 1 | 590 | 6.9 | 1.69 |
| Comparative Example 2 | 580 | 8.3 | 1.13 |
| Comparative Example 3 | 542.5 | 9 | 2.98 |
| Comparative Example 4 | 567 | 8.2 | 2.53 |
| Comparative Example 5 | 522 | 15.8 | 1.09 |

Examples 6-11 demonstrate that potassium sorbate, by itself or blended with TPG, PPG, glycerol, and optionally TIPA, functions as an effective grinding aid, with an additive dosage of 1500 ppm, providing ground material having considerably higher surface area and smaller particles than ground material produced using no grinding aid, as in Comparative Example 5, and providing ground material having smaller particles than ground material produced with a TPG or PPG grinding aid, as in Comparative Examples 1 and 2.

Examples 6-10 demonstrate that blends of TPG or PPG with potassium sorbate, and optionally with TIPA at 1500ppm promote significantly less water absorption (mg/g) than the target 1.6 mg/g.

Blends of (PPG or TPG)/potassium sorbate/TIPA and (PPG or TPG)/potassium sorbate (Examples 6-9) at 1500ppm are better grinding aids than PPG or TPG alone, as in Comparative Examples 1 and 2, giving a significantly smaller amount of material retained on a 45µm sieve than comparative examples 1 and 2.

Potassium sorbate based grinding aids, (Examples 6-11), including a blend of potassium sorbate and glycerol, are better grinding aids than blends containing glycerol and sodium acetate or triisopropanolamine, used in Comparative Examples 3 and 4, with a smaller amount of material retained on the 45µm sieve for Examples 6-11, as compared to Comparative Examples 3 and 4. Water absorption with blends of (PPG or TPG)/potassium sorbate/TIPA and (PPG or TPG)/potassium sorbate (Examples 6-9), or potassium sorbate alone (Example 10), or glycerol/potassium sorbate (Example 11) is significantly lower than water absorption with blends containing glycerol and sodium acetate or triisopropanolamine (Comparative Examples 3 and 4). Water absorption in Comparative Examples 3 and 4 significantly exceeds the target water absorption of 1.6 mg/g.

In summary, a stable and high-solid content liquid grinding additive composition containing high levels of potassium sorbate, glycerin, and water provides grinding efficiency for carbonates, and it is believed this will also be achieved for other inorganic particles as well, including lime, cement, and other inorganic materials. The use of small chain fatty acids, such as potassium sorbate, can provide food-grade, VOC-free, and anti-humectant properties (e.g., lower moisture absorption tendency in the resultant product), and can help manufacturers of ground carbonate (limestone) particles to a broader client base.

The foregoing example and embodiments were present for illustrative purposes only and not intended to limit the scope of the invention.

## Claims

1. A method for comminuting inorganic material to a finer particle size, comprising: grinding a carbonate material into powder particles, in a ball or roller mill, into which is introduced a liquid-additive composition comprising (a) a fatty acid compound in the amount of 10%-60% by weight, the fatty acid compound being represented by the structural formula CH₃-(CH)ₙ-COO⁻M⁺ wherein M represents potassium, and n represents an integer of 3 to 10; and (b) water in the amount of 5%-90%, all percentages being based on total weight of the liquid-additive composition introduced to the carbonate powder particles being ground, and wherein the liquid-additive composition is used at a dosage of at least 100ppm based upon dry material being ground.

2. The method of claim 1 wherein the fatty acid compound comprises potassium sorbate.

3. The method of claim 1 wherein n is 4.

4. The method of any preceding claim wherein glycerin is present in an amount of 0%- 90% by weight based on total weight of the liquid-additive composition being introduced to the carbonate material being ground.

5. The method of claim 4 wherein glycerin is present in an amount of at least 5% by weight based on total weight of the liquid-additive composition being introduced to the carbonate material being ground.

6. The method of any preceding claim wherein the liquid additive composition comprises tripropylene glycol and/or polypropylene glycol in an amount of from 0.1 to 88 wt% by weight of the liquid-additive composition.

7. The method of claim 1 wherein the liquid additive composition comprises potassium sorbate in the amount of at least 20% by weight of the liquid-additive composition.

8. The method of claim 1 wherein the liquid additive composition comprises potassium sorbate in the amount of at least 30% by weight of the liquid-additive composition.

9. The method of claim 4 or claim 5 wherein the liquid additive composition comprises glycerin derived as a byproduct of biodiesel fuel production.

10. The method of any preceding claim wherein the liquid additive composition comprises water in the amount of 20% - 60% by weight of the liquid-additive composition.

11. The method of any preceding claim wherein the carbonate material comprises a calcined carbonate, non-calcined carbonate, or mixture thereof.

12. The method of any preceding claim wherein, in addition to carbonate material, the grinding includes an additional inorganic material selected from lime, dolomite, talc, titanium dioxide, alumina, kaolin, ceramics, and cement clinker.

13. The method of claim 12 wherein the additional inorganic material is lime.

14. The method of claim 1 comprising: grinding a carbonate material into powder particles, in a ball or roller mill, into which is introduced a liquid-additive composition comprising (a) a fatty acid compound in the amount of 20%-60% by weight, the fatty acid compound being represented by the structural formula CH₃-(CH)ₙ-COO⁻M⁺ wherein M represents potassium, and n represents an integer of 3 to 10; and (b) a glycerin in the amount of 20%-50% by total weight; and (c) water in the amount of 20%-60%, all percentages being based on total weight of the liquid-additive composition introduced to the carbonate powder particles being ground.

## Patentansprüche

1. Verfahren zum Zerkleinern von anorganischem Material zu einer feineren Partikelgröße, umfassend: Mahlen eines Carbonatmaterials in Pulverpartikel, in einer Kugel- oder Walzenmühle, in das eine flüssige Additivzusammensetzung eingeführt wird, umfassend (a) eine Fettsäureverbindung in der Menge von 10 Gew.-% bis 60 Gew.-%, wobei die Fettsäureverbindung durch die Strukturformel CH₃-(CH)ₙ-COO⁻M⁺ dargestellt wird, wobei M Kalium darstellt und n eine Ganzzahl von 3 bis 10 darstellt; und (b) Wasser in der Menge von 5 % bis 90 %, wobei alle Prozentzahlen auf dem Gesamtgewicht der flüssigen Additivzusammensetzung basieren, die in die Carbonatpulverpartikel eingeführt wird, die gemahlen werden, und wobei die flüssige Additivzusammensetzung in einer Dosierung von mindestens 100 ppm verwendet wird, basierend auf Trockenmaterial, das gemahlen wird.

2. Verfahren nach Anspruch 1, wobei die Fettsäureverbindung Kaliumsorbat umfasst.

3. Verfahren nach Anspruch 1, wobei n 4 ist.

4. Verfahren nach einem vorhergehenden Anspruch, wobei Glyzerin in einer Menge von 0 Gew.-% bis 90 Gew.-% vorhanden ist, basierend auf dem Gesamtgewicht der flüssigen Additivzusammensetzung, die in das Carbonatmaterial eingeführt wird, das gemahlen wird.

5. Verfahren nach Anspruch 4, wobei Glyzerin in einer Menge von mindestens 5 Gew.-% vorhanden ist, basierend auf dem Gesamtgewicht der flüssigen Additivzusammensetzung, die in das Carbonatmaterial eingeführt wird, das gemahlen wird.

6. Verfahren nach einem vorhergehenden Anspruch, wobei die flüssige Additivzusammensetzung Tripropylenglykol und/oder Polypropylenglykol in einer Menge von 0,1 bis 88 Gew.-% der flüssigen Additivzusammensetzung umfasst.

7. Verfahren nach Anspruch 1, wobei die flüssige Additivzusammensetzung Kaliumsorbat in der Menge von mindestens 20 Gew.-% der flüssigen Additivzusammensetzung umfasst.

8. Verfahren nach Anspruch 1, wobei die flüssige Additivzusammensetzung Kaliumsorbat in der Menge von mindestens 30 Gew.-% der flüssigen Additivzusammensetzung umfasst.

9. Verfahren nach Anspruch 4 oder Anspruch 5, wobei die flüssige Additivzusammensetzung Glyzerin umfasst, das als ein Nebenprodukt von Biodieselkraftstoffproduktion gewonnen wird.

10. Verfahren nach einem vorhergehenden Anspruch, wobei die flüssige Additivzusammensetzung Wasser in der Menge von 20 Gew.-% bis 60 Gew.-% der flüssigen Additivzusammensetzung umfasst.

11. Verfahren nach einem vorhergehenden Anspruch, wobei das Carbonatmaterial ein kalziniertes Carbonat, nicht kalziniertes Carbonat oder ein Gemisch davon ist.

12. Verfahren nach einem vorhergehenden Anspruch, wobei, zusätzlich zu Carbonatmaterial, das Mahlen ein zusätzliches anorganisches Material beinhaltet, ausgewählt aus Kalk, Dolomit, Talk, Titandioxid, Tonerde, Kaolin, Keramik und Zementklinker.

13. Verfahren nach Anspruch 12, wobei das zusätzliche anorganische Material Kalk ist.

14. Verfahren nach Anspruch 1, umfassend: Mahlen eines Carbonatmaterials in Pulverpartikel, in einer Kugel- oder Walzenmühle, in das eine flüssige Additivzusammensetzung eingeführt wird, umfassend (a) eine Fettsäureverbindung in der Menge von 20 Gew.-% bis 60 Gew.-%, wobei die Fettsäureverbindung durch die Strukturformel CH₃-(CH)ₙ-COO⁻M⁺ dargestellt wird, wobei M Kalium darstellt und n eine Ganzzahl von 3 bis 10 darstellt; und (b) ein Glyzerin in der Menge von 20 % bis 50 % des Gesamtgewichts; und (c) Wasser in der Menge von 20 % bis 60 %, wobei alle Prozentzahlen auf dem Gesamtgewicht der flüssigen Additivzusammensetzung basieren, die in die Carbonatpulverpartikel eingeführt wird, die gemahlen werden.

## Revendications

1. Procédé pour broyer un matériau inorganique à une granulométrie plus fine, comprenant : le broyage d'un matériau carbonate en particules de poudre, dans un broyeur à billes ou à rouleaux, dans lequel est introduite une composition d'additif liquide comprenant (a) un composé d'acide gras en une quantité de 10% à 60% en poids, le composé d'acide gras étant représenté par la formule développée CH₃-(CH)ₙ-COO⁻M⁺ dans lequel M représente le potassium et n représente un entier de 3 à 10 ; et (b) de l'eau en une quantité de 5% à 90%, tous les pourcentages étant basés sur le poids total de la composition d'additif liquide introduite dans les particules de poudre de carbonate à broyer, et dans lequel la composition d'additif liquide est utilisée à un dosage d'au moins 100 ppm sur la base du matériau sec broyé.

2. Procédé selon la revendication 1, dans lequel le composé d'acide gras comprend du sorbate de potassium.

3. Procédé selon la revendication 1, dans lequel n vaut 4.

4. Procédé selon l'une quelconque des revendications précédentes, dans lequel la glycérine est présente en une quantité de 0% à 90% en poids sur la base du poids total de la composition d'additif liquide introduite dans le matériau carbonate broyé.

5. Procédé selon la revendication 4, dans lequel la glycérine est présente en une quantité d'au moins 5% en poids sur la base du poids total de la composition d'additif liquide introduite dans le matériau carbonate broyé.

6. Procédé selon l'une quelconque des revendications précédentes, dans lequel la composition d'additif liquide comprend du tripropylèneglycol et / ou du polypropylèneglycol en une quantité de 0,1 à 88% en poids de la composition d'additif liquide.

7. Procédé selon la revendication 1, dans lequel la composition d'additif liquide comprend du sorbate de potassium en une quantité d'au moins 20% en poids de la composition d'additif liquide.

8. Procédé selon la revendication 1, dans lequel la composition d'additif liquide comprend du sorbate de potassium en une quantité d'au moins 30% en poids de la composition d'additif liquide.

9. Procédé selon la revendication 4 ou la revendication 5, dans lequel la composition d'additif liquide comprend de la glycérine dérivée comme sous-produit de la production de carburant biodiesel.

10. Procédé selon l'une quelconque des revendications précédentes, dans lequel la composition d'additif liquide comprend de l'eau en une quantité de 20% à 60% en poids de la composition d'additif liquide.

11. Procédé selon l'une quelconque des revendications précédentes, dans lequel le matériau carbonate comprend un carbonate calciné, un carbonate non calciné ou un mélange de ceux-ci.

12. Procédé selon l'une quelconque des revendications précédentes, dans lequel, en plus du matériau carbonate, le broyage comprend un matériau inorganique supplémentaire choisi parmi la chaux, la dolomite, le talc, le dioxyde de titane, l'alumine, le kaolin, la céramique et le clinker de ciment.

13. Procédé selon la revendication 12, dans lequel le matériau inorganique supplémentaire est de la chaux.

14. Procédé selon la revendication 1, comprenant : le broyage d'un matériau carbonate en particules de poudre, dans un broyeur à billes ou à rouleaux, dans lequel est introduite une composition d'additif liquide comprenant (a) un composé d'acide gras en une quantité de 20% à 60% en poids, le composé d'acide gras étant représenté par la formule développée CH₃-(CH)ₙ-COO⁻M⁺ dans lequel M représente le potassium, et n représente un entier de 3 à 10 ; et (b) une glycérine en une quantité de 20% à 50% en poids total ; et (c) de l'eau en une quantité de 20% à 60%, tous les pourcentages étant basés sur le poids total de la composition d'additif liquide introduite dans les particules de poudre de carbonate broyées.
